# EUROPEAN PATENT APPLICATION

(11) **EP 2 444 895 A1**
(43) Date of publication of application: **25.04.2012**
(21) Application number: 10013308.1
(22) Date of filing: 05.10.2010
(51) Int. Cl.: G06F 9/445

(54) **Hot-replacement method of a software system for a controller using multiple cores**

(71) Applicant: ABB Technology AG, 8050 Zürich (CH)
(72) Inventor: Stich, Christian, 69493 Hirschberg-Leutershausen (DE); Dix, Marcel, Dipl.-Inf., 68167 Mannheim (DE); Aleksy, Markus, 67071 Ludwigshafen (DE); Maczey, Sylvia, 69493 Hirschberg (DE)
(74) Representative: Partner, Lothar

(57) **Abstract**

A hot-replacement method of a software system for a controller using multiple cores is proposed,
- wherein at a starting point (A) an application is running on at least one core and at least one further idle core is not in charge of running this application and a new software or a replacement for the software system is ready to be installed,
- wherein according a first method step (B) at least one idle core is determined that is currently not in charge of running the application,
- wherein according a second method step (C) at least one idle core is used for installing the new software or the replacement,
- wherein according a third method step (D) after the transfer of the new software or of the replacement at least one idle core is reinitialized, meanwhile the application running on the at least one other core is not affected by this re-initialization and can continuously run,
- wherein according a fourth method step (E) after the re-initialization the application is also started on the at least one reinitialized, previously idle core,
- wherein according a fifth method step (F) in case of a necessary synchronization the current state of the previously running application is transferred to the updated application and the updated application now becomes the primary application,
- wherein according a sixth method step (G) the other application on the at least one, previously active core may either be stopped or be continued as redundant software system in a secondary mode.

## Description

The invention relates to a hot-replacement method of a software system for a controller using multiple cores.

Considering embedded systems, controllers, real-time systems and so on it is a challenge to update software systems without shutting them down. Shutting down an embedded real-time system may however cause downtimes for a whole plant. Here, the utilization of multi-core processors can help avoiding these costly downtimes.

Currently updating an embedded real-time system requires a re-initialization of the embedded system. The application or plant needs to be stopped for the maintenance task of installing a new patch or update. After the installation of the new software the computer hosting the embedded system needs to be reinitialized and the application has to be restarted. For plants that usually run twenty-four hours a day this means that downtimes have to be scheduled for the plant which results in less production times and less throughput.

OMG specifications (Object Management Group) for Online Upgrades facilitate the safe and orderly upgrading of object groups. However it is tied to the CORBA standard (Common Object Request Broker Architecture) which introduces severe overhead in real-time embedded systems. Additionally OMG's approach supports replacements, for instance updates on object level and not on software level.

Therefore it is an object oft the invention to provide an optimized hot-replacement method of a software system for a controller using multiple cores.

The problem is solved by a hot-replacement method of a software system for a controller using multiple cores,
- wherein at a starting point an application is running on at least one core and at least one further idle core is not in charge of running this application and a new software or a replacement for the software system is ready to be installed,
- wherein according a first method step at least one idle core is determined that is currently not in charge of running the application,
- wherein according a second method step at least one idle core is used for installing the new software or the replacement,
- wherein according a third method step after the transfer of the new software or of the replacement at least one idle core is reinitialized, meanwhile the application running on the at least one other core is not affected by this re-initialization and can continuously run,
- wherein according a fourth method step after the re-initialization the application is also started on the at least one reinitialized, previously idle core,
- wherein according a fifth method step in case of a necessary synchronization the current state of the previously running application is transferred to the updated application and the updated application now becomes the primary application,
- wherein according a sixth method step the other application on the at least one, previously active core may either be stopped or be continued as redundant software system in a secondary mode.

It is an advantage that the proposed hot-replacement method of a software system introduces a replacement process that supports updating entire software systems making semantic changes to data structures and eliminates the downtimes of the embedded system by using multiple-core controllers respectively processors.

A further advantage of the invention is mentioned in the dependent claim.

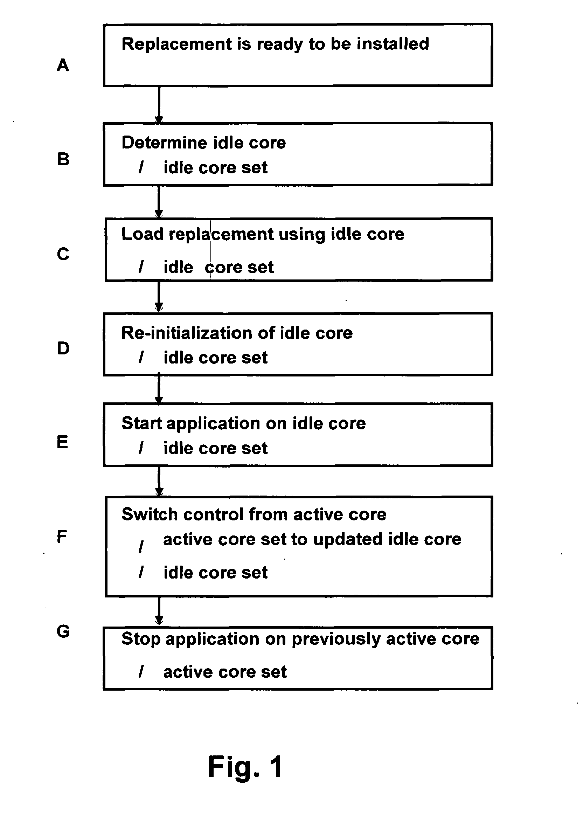

The invention will now be further explained by means of an exemplary embodiment and with reference to the accompanying drawing, in which Figure 1 shows the successive method steps.

The invention is based on the fact that processors are available on the market that have two or more kernels that can be separately reinitialized and allow the execution of different processes in parallel. The proposed method enables hot-replacements of software system using two or more cores, wherein the following "cores" are considered:
- Regular CPU cores (Central Processor Unit),
- FPGAs (Field Programmable Gate Arrays) and
- DSPs (Digital Signal Processors).

During hot-replacements, one or more multiple cores are used to still run the application; another core is used to install a replacement on the running software system. The cores are flexible assigned to different tasks of a real-time application. After a defined time or after an event the application falls-over to the updated version.

A number of cores are used for running the application online; the other cores are used to update the software system.

Applications which are running twenty-four hours or which are redundant will benefit from online replacement. In addition a re-initialization of the whole embedded software system could be prevented by only rebooting the affected cores.

The replacement process can be described by the following successive steps - see Figure 1:

| | |
|---|---|
| Starting point A: | An application is running on one or more cores. At least one further core is not in charge of running this application, designated as "idle core". A replacement for the software |
| First method step B: | system for instance a new version of this application is ready to be installed. The idle core respectively a set of idle cores is determined that is currently not in charge of running the application. |
| Second method step C: | The idle core respectively the set of cores is used for installing the new software, for instance the new version of the application (load replacement). |
| Third method step D: | After the transfer of the new software this idle core respectively this set of cores is reinitialized. The application running on one or more other cores is not affected by this re-initialization and can continuously run. |
| Fourth method step E: | After the re-initialization the application is also started on the reinitialized, previously idle core respectively set of cores. |
| Fifth method step F: | In case of a necessary synchronization the current state of the previously running application can now be transferred to the updated application. In the Figure 1 this method step is designated with "switch control from active core to updated idle core" respectively "switch control from active core set to updated idle core set". The updated application now becomes the primary application. |
| Sixth method step G: | The other application (running with old version of the software system) on previously active core respectively set of cores may either be stopped or be continued as redundant software system in a secondary mode. |

In the explanation above a "replacement" should express "Update", "Upgrate", "Downgrate", "Migrate", that means there is no restriction to "Update".

### List of reference signs

- A: starting point
- B: first method step
- C: second method step
- D: third method step
- E: fourth method step
- F: fifth method step
- G: sixth method step

## Claims

1. Hot-replacement method of a software system for a controller using multiple cores,
- wherein at a starting point (A) an application is running on at least one core and at least one further idle core is not in charge of running this application and a new software or a replacement for the software system is ready to be installed,
- wherein according a first method step (B) at least one idle core is determined that is currently not in charge of running the application,
- wherein according a second method step (C) at least one idle core is used for installing the new software or the replacement,
- wherein according a third method step (D) after the transfer of the new software or of the replacement at least one idle core is reinitialized, meanwhile the application running on the at least one other core is not affected by this re-initialization and can continuously run,
- wherein according a fourth method step (E) after the re-initialization the application is also started on the at least one reinitialized, previously idle core,
- wherein according a fifth method step (F) in case of a necessary synchronization the current state of the previously running application is transferred to the updated application and the updated application now becomes the primary application,
- wherein according a sixth method step (G) the other application on the at least one, previously active core may either be stopped or be continued as redundant software system in a secondary mode.

2. Hot-replacement method according to claim 1, **characterized in that** the new software is a different one.
